# EUROPÄISCHE PATENTANMELDUNG

(11) **EP 1 978 386 A2**
(43) Veröffentlichungstag der Anmeldung: **08.10.2008**
(21) Anmeldenummer: 08102431.7
(22) Anmeldetag: 10.03.2008
(51) Int. Cl.: G02B 6/38

(54) **Kupplungsteil für eine Steckverbindung**

(30) Priorität: 03.04.2007 CH 5342007
(71) Anmelder: Diamond SA, 6616 Losone (CH)
(72) Erfinder: Minazzi, Maurizio, 21010, Germignaga (IT)
(74) Vertreter: Wenger, René

(57) **Zusammenfassung**

Ein Kupplungsteil für eine optische Steckverbindung besteht aus einem hülsenartigen Kupplungsgehäuse (2), mit dessen Hilfe zwei Steckerteile miteinander verbindbar sind und zwei federnd und begrenzt verschiebbar am Kupplungsgehäuse (2) abgestützten Rastelementen (3, 3') zum Einsetzen in eine Öffnung (4) einer Frontplatte (5). Durch Zusammendrücken der Rastelemente (3, 3') an den Griffabschnitten (6) ist die Rastverbindung lösbar. Zum Festlegen der eingesetzten Position bildet ein Winkelabschnitt (17) des Rastelements (3) einen Anschlag für die Vorderseite der Frontplatte (5). Das Rastelement (3) ist im Querschnitt U-förmig ausgebildet, wobei es zwei Schenkelabschnitte (8, 9) aufweist, die durch den Griffabschnitt (6) miteinander verbunden sind. Zum Festlegen der Verschieberichtung und/oder zum Begrenzen des Verschiebewegs ist an der Seitenwand (22) des Kupplungsgehäuses (2) eine Erhebung (23) angeordnet, die in eine Ausnehmung (13) eines Schenkelabschnitts (8) eingreift.

## Beschreibung

Die Erfindung betrifft ein Kupplungsteil für eine Steckverbindung gemäss dem Oberbegriff von Anspruch 1. Derartige Kupplungsteile eignen sich insbesondere für optische Steckverbindungen, bei welchen mit Hilfe eines hülsenartigen Kupplungsgehäuses zwei optische Steckerteile miteinander verbunden werden können. Das Kupplungsteil selbst ist an eine Frontplatte, beispielsweise einer Gerätewand befestigbar.

Ein Kupplungsteil für eine optische Steckverbindung zum Befestigen an einer vertikalen Frontplatte oder auf eine horizontale Trägerplatte ist beispielsweise in der EP 974 854 A1 gezeigt. Das Kupplungsteil verfügt über ein hülsenartiges Kupplungsgehäuse, auf dem verschiedenartige Halterungen lösbar befestigt werden können. Bei den Halterungen handelt es sich um einstückige Biegeteile aus Metall. Sie können als Rastelemente ausgestaltet sein, wodurch sie rastend in korrespondierende rechteckige Öffnungen einer Frontplatte einsetzbar sind. Hierzu sind auf zwei gegenüberliegenden Seiten des Rastelements federnde Klemmbügel vorgesehen, die zusammen mit einem Widerlager in der Öffnung der Frontplatte verspannbar sind. Beim Einschieben des Kupplungsteils in die Öffnung werden die nach aussen abgewinkelten Klemmbügel niedergedrückt, bis die Widerlager die Frontplatte erreicht haben. Dann federn die Klemmbügel wieder nach aussen, womit die Rastverbindung hergestellt ist. Zum Lösen der Rastverbindung müssen die Klemmbügel zuerst manuell oder mittels eines Werkzeuges niedergedrückt werden, erst dann kann das Kupplungsteil aus der Öffnung herausgezogen werden. Bei Kupplungsteilen geringer Dimensionen, welche üblicherweise für optische Steckverbindungen verwendet werden, hat sich herausgestellt, dass die Handhabung dieser Kupplungsteile wegen der geringen Grösse des Klemmbügels schwierig sein kann.

In der EP 1 320 770 B1 ist ein gattungsmässig vergleichbares Kupplungsteil gezeigt, dessen Rastelemente federnd und begrenzt verschiebbar am Kupplungsgehäuse abgestützt sind. Die Rastelemente verfügen über einen sich über die gesamte Breite des Kupplungsgehäuses erstreckenden Griffabschnitt. Durch Druck gegen das Kupplungsgehäuse der zwei Griffabschnitte kann eine Rastverbindung mit einer Frontplatte auf einfache Art und Weise gelöst werden. Am Kupplungsgehäuse sind auf zwei gegenüberliegenden Seiten Flansche angeformt, die einen Anschlag für die Vorderseite der Frontplatte bilden. Dieser Flansch dient ebenfalls zum Festhalten jeweils eines Rastelements und bildet einen Anschlag zum Begrenzen des Verschiebewegs eines Rastelements weg vom Kupplungsgehäuse. Ein Nachteil dieses Kupplungsteils ist dessen verhältnismässig grosser Platzbedarf. Ausserdem sind die mit einem Flansch versehenen Kupplungsgehäuse nicht für andere Zwecke einsetzbar und können z.B. nicht mit alternativen Befestigungsmitteln auf einer Platine befestigt werden.

Es ist daher eine Aufgabe der vorliegenden Erfindung, die Nachteile des Bekannten zu vermeiden und insbesondere ein Kupplungsteil der Eingangs genannten Art zu schaffen, das sich durch einen geringen Platzbedarf auszeichnet. Das Kupplungsteil soll eine schlanke Bauweise ermöglichen. Das Kupplungsteil soll weiter einfach herstellbar sein und sich durch eine einfache Handhabung beim Montieren und Demontieren an eine Frontplatte auszeichnen. Ausserdem soll sich das Kupplungsgehäuse auch als Standardbauteil für andere Zwecke eignen.

Diese Aufgaben werden erfindungsgemäss mit einem Kupplungsteil gelöst, das die Merkmale im Anspruch 1 aufweist. Dadurch, dass zum Festlegen der eingesetzten Position das Rastelement einen Anschlag für die Vorderseite der Frontplatte bildet, kann eine schlanke Bauweise erreicht werden. Insbesondere müssen nicht dem Kupplungsgehäuse vorstehende Flanschabschnitte zum Bilden eines Anschlags für die Frontplatte verwendet werden. Das Rastelement kann als einstückiges, separates Biegeteil aus Metall ausgebildet sein. Derartige Kupplungsteile eigenen sich insbesondere für optische Steckverbindungen von optischen Steckerteilen. Selbstverständlich wäre es aber auch denkbar - statt zwei Steckerteile miteinander zu verbinden - das Kupplungsgehäuse als Receptacle auszubilden, bei dem ein einseitig eingestecktes Steckerteil Licht auf ein fest montiertes optisches Element sendet bzw. Licht von diesem Element empfängt.

Die Federung kann eine Blattfeder sein, die am Rastelement angeformt ist. Selbstverständlich wäre es aber auch denkbar, separate Federmittel vorzusehen. Ein solches Federmittel könnte beispielsweise eine Schraubendruckfeder sein, die zwischen Griffabschnitt und Kupplungsgehäuse angeordnet ist.

In einem weiteren Ausführungsbeispiel können an den Griffabschnitt zwei sich etwa planparallel entlang dem Kupplungsgehäuse erstreckende Armabschnitte anschliessen. Zwischen den Armabschnitten kann eine vorzugsweise durch Stanz- und Biegeoperationen geschaffene Federzunge als Blattfeder angeordnet sein. Ein derart einstückig ausgebildetes Rastelement lässt sich einfach herstellen.

Vorteilhaft kann es dabei sein, wenn die Federzunge in einem spitzen Winkel gegenüber den Armabschnitten abgewinkelt ist und sich in Einsetzrichtung erstreckt. Mit anderen Worten kann das freie Ende der Federzunge gegen die vorderen Enden der Armabschnitte gerichtet sein. Ein Umklappen der Federzunge gegen den Griffabschnitt ist nicht nötig. Selbstverständlich wäre es aber alternativ auch denkbar, dass die Federzunge gegenüber dem Griffabschnitt soweit umgeklappt ist, dass sie einen spitzen Winkel zum Griffabschnitt definiert.

Das Rastelement kann im Querschnitt U-förmig ausgebildet sein, wobei es zwei Schenkelabschnitte aufweist, die durch den quer zu diesen verlaufenden Griffabschnitt miteinander verbunden sind. Die Schenkelabschnitte schliessen dabei etwa im rechten Winkel an den Griffabschnitt an.

Besonders vorteilhaft kann es sein, wenn das Rastelement am Kupplungsgehäuse aufgeschnappt oder aufschnappbar ist, wobei die Schenkelabschnitte in aufgeschnappter Lage etwa vertikal zum Griffabschnitt verlaufen und in Ruhelage zum Erzeugen einer Vorspannung gegenüber einer rechtwinklig zum Griffabschnitt verlaufenden Ebene nach innen geneigt sind. In der Ruhelage befindet sich das Rastelement, wenn es (noch) nicht am Kupplungsgehäuse befestigt ist. Diese Anordnung gewährleistet eine vorteilhafte lösbare Befestigung des Rastelements am Kupplungsgehäuse, wobei gleichzeitig dessen Beweglichkeit in Verschieberichtung gewährleistet ist.

Zum Festlegen der Verschieberichtung und/oder zum Begrenzen des Verschiebewegs kann an wenigstens einer Seitenwand des Kupplungsgehäuses eine Erhebung angeordnet sein, die in eine Ausnehmung eines Schenkelabschnitts eingreift. Die Erhebung kann gegenüber einer Gleitfläche auf der das Rastelement bei einer Verschiebebewegung entlang gleitet, soweit vorragen, dass dessen plane Aussenfläche etwa bündig zu einer benachbarten Aussenseite des Rastelements verläuft. Die Tiefe der Erhebung kann damit etwa der Dicke des Rastelements wenigstens im Bereich von deren Griffabschnitte entsprechen.

Vorteilhaft kann es sein, wenn die Erhebung und die Ausnehmung in einer Draufsicht je eine rechteckige Form aufweisen. Zwei Rechteckseiten der Erhebung können dabei in Verschieberichtung verlaufen, wodurch eine vorteilhafte Führung für das Rastelement erreichbar ist. Die beiden anderen Rechteckseiten, d.h. die quer zur Verschieberichtung verlaufenden Rechteckseiten, können jeweils einen Anschlag zum Begrenzen des Verschiebewegs für das Rastelement bilden.

Eine weitere Ausführungsform des Kupplungsteils kann sich dadurch auszeichnen, dass zwei Rastelemente vorgesehen sind, die jeweils federnd an gegenüberliegenden Seitenwänden des Kupplungsgehäuses abstützt sind und dass an zwei einander gegenüberliegenden Seitenwänden des Kupplungsgehäuses je eine Erhebung angeordnet ist und dass jedes Rastelement einen Schenkelabschnitt mit einer Ausnehmung aufweist, wobei zum Festlegen der Verschieberichtung und/oder zum Begrenzen des Verschiebewegs jeweils eine Erhebung in die entsprechende Ausnehmung eingreift. Durch Zusammendrücken der Griffabschnitte gegeneinander kann die Rastverbindung mit der Frontplatte auf einfache Art und Weise gelöst werden. Eine derartige Anordnung kann auch für Kupplungsteile konventioneller Bauart (d.h. ein Kupplungsteil gemäss Oberbegriff des Anspruchs 1) vorteilhaft sein.

Das hülsenartige Kupplungsgehäuse kann im Querschnitt rechteckig ausgebildet sein, wobei zwei einander gegenüberliegende Seitenwände je einem Griffabschnitt eines Rastelements zugeordnet sein können. An den an diesen Seitenwänden rechtwinklig anschliessenden Seitenwänden können die Schenkelabschnitte anlegbar sein oder anliegen.

Besonders vorteilhaft ist es, wenn die beiden Rastelemente gleich ausgebildet sind. Somit werden für einen Bausatz zum Herstellen des Kupplungsteils im Wesentlichen lediglich zwei verschieden ausgebildete Bauteile (ein Kupplungsteil, zwei gleiche Rastelemente) benötigt.

Vorteilhaft kann es weiter sein, wenn wenigstens ein, bevorzugt jedes Rastelement einen Schenkelabschnitt mit einem Rahmen aufweist, in dem die Ausnehmung angeordnet ist und wenn im gegenüberliegenden Schenkelabschnitt eine Führungsanordnung mit zwei parallelen Führungsabschnitten vorgesehen ist, zwischen denen der Rahmen des jeweils anderen Rastelements in Verschieberichtung begrenzt verschiebbar ist. Die sich in Verschieberichtung erstreckenden Führungsabschnitte können ein (bezogen auf die Verschieberichtung) vorderes Ende aufweisen, das einen Anschlag für das gegenüberliegende andere Rastelement bilden kann. Durch derart ineinander greifende Rastelemente kann ein Kupplungsteil geschaffen werden, das sich durch einen besonders geringen Platzbedarf auszeichnet.

Am Rastelement kann ein vorzugsweise etwa vertikal zur Seitenwand verlaufender Winkelabschnitt angeordnet sein, der einen Anschlag für die Vorderseite der Frontplatte bilden kann. Derartige Winkelabschnitte lassen sich auf einfache Art und Weise durch Biegeoperationen herstellen.

Besonders vorteilhaft kann es sein, wenn der Winkelabschnitt an wenigstens einem Schenkelabschnitt angeordnet ist. Dabei kann vorzugsweise am bezogen auf die Einsetzrichtung vorderen Ende des vorderen Führungsabschnitts ein solcher Winkelabschnitt angeordnet sein. Sofern das Kupplungsteil über zwei Rastelemente verfügt, die jeweils federnd an gegenüberliegenden Seitenwänden angeordnet sind, kann es vorteilhaft sein, wenn jeweils nur ein Schenkelabschnitt eines Rastelements einen Winkelabschnitt aufweist. Die Winkelabschnitte können dann bei der Befestigung des Rastelements am Kupplungsgehäuse zwei gegenüberliegenden Seitenwänden des Kupplungsgehäuses zugeordnet sein.

Das Kupplungsgehäuse kann einen wenigstens teilweise umlaufenden Kragen als Seitenbegrenzung und Führung für das wenigstens eine Rastelement aufweisen. Besonders bevorzugt kann es sein, wenn das Kupplungsgehäuse zwei derartig wenigstens teilweise umlaufende Kragen aufweist. Jeder Kragen kann dabei als Seitenbegrenzung und Führung für jeweils entgegen gesetzte Einsetzrichtung dienen. Besonders vorteilhaft kann der Kragen vollumfänglich umlaufend ausgebildet sein.

Der Kragen kann durch wenigstens einen Endabschnitt gebildet sein, wobei die von den Rastelementen beaufschlagten Bereiche der Seitenwände gegenüber dem Endabschnitt zurück versetzt sind. Der Griffabschnitt kann in einer Endstellung durch Druckbeaufschlagung soweit gegen das Kupplungsgehäuse verschiebbar sein, dass der Griffabschnitt bündig oder nahezu bündig zum Endabschnitt verläuft.

Ein weiterer Aspekt der Erfindung betrifft ein Rastelement zum Halten eines Moduls, insbesondere des vorgängig beschriebenen Kupplungsteils. Das Rastelement ist mittels Federmitteln, beispielsweise mittels angeformten Blattfedern federnd und begrenzt verschiebbar an einem Gehäuse des Moduls, insbesondere am Kupplungsgehäuse abstützbar. Es verfügt über wenigstens ein Widerlager, das mit einer Rückseite der Frontplatte in Eingriff bringbar ist. Zum Bilden eines Anschlags für eine Forderseite der Frontplatte kann am Rastelement ein Winkelabschnitt angeformt sein. Alternativ kann der Anschlag für die Forderseite der Frontplatte durch eine rückseitige Flanke einer eine Ausnehmung umfassenden Sperrklinke gebildet sein, wobei eine der Rückseite gegenüberliegende Flanke der Ausnehmung das Widerlager für die Rückseite der Frontplatte bilden kann. In diesem Fall kann die Sperrklinke in der eingesetzten Position derart in der Öffnung der Frontplatte eingesetzt sein, dass die Flanken des Ausschnitts für jede Seite der Frontplatte einen Anschlag bilden.

In einer vorteilhaften Ausführungsform des Rastelements kann die vordere Stütze der Sperrklinke gerundet sein. Auf diese Weise lässt sich das Rastelement beim Rastvorgang auf vorteilhafte Art und Weise in die Öffnung der Frontplatte einführen.

Weitere Vorteile und Einzelmerkmale der Erfindung ergeben sich aus den Zeichnungen und aus der nachfolgenden Beschreibung eines Ausführungsbeispiels. Es zeigen:
- Figur 1: eine perspektivische Darstellung eines Kupplungsteils vor dem Einsetzen in eine Frontplatte,
- Figur 2: eine Seitenansicht des Kupplungsteils gemäss Figur 1 in eingesetzter Position,
- Figur 3: das Kupplungsteil gemäss Figur 2 nach Druckbeaufschlagung zum Lösen der Rastverbindung mit der Frontplatte,
- Figur 4: ein vergrössertes Kupplungsteil in Explosionsdarstellung mit einem Kupplungsgehäuse und zwei an dieses aufschnappbaren Rastelementen,
- Figur 5: eine perspektivische Darstellung eines Rastelements,
- Figur 6: eine Vorderansicht auf das Rastelement gemäss Figur 5,
- Figur 7: einen Längsschnitt durch das Rastelement gemäss Figur 5 (Schnitt B-B gemäss Figur 6), und
- Figur 8: eine Seitenansicht auf das Kupplungsteil gemäss Figur 5.

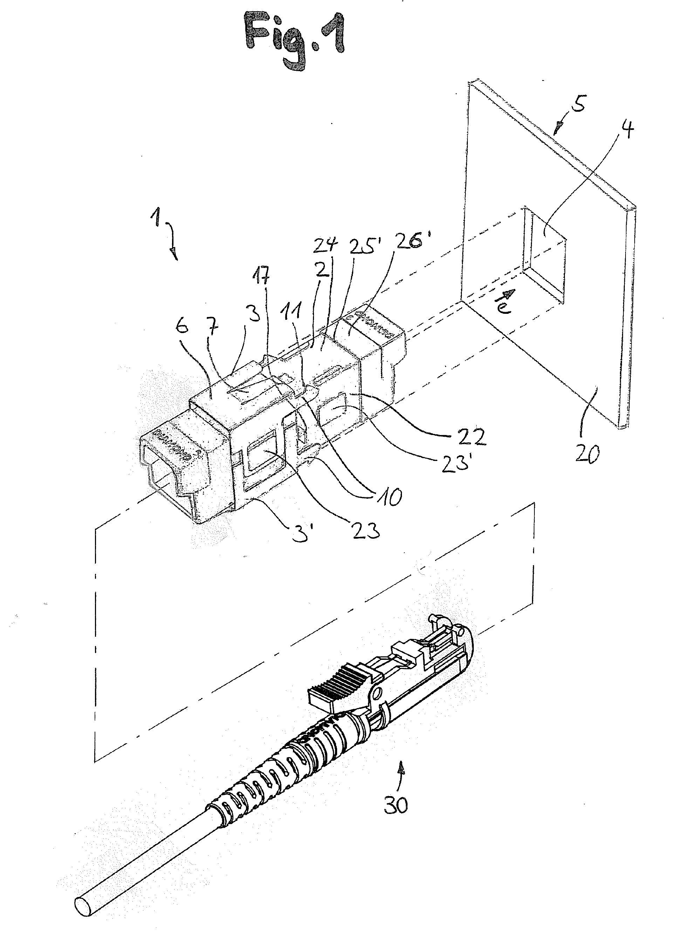

In der perspektivischen Darstellung gemäss Figur 1 ist ein mit 1 bezeichnetes Kupplungsteil gezeigt, das in Einsetzrichtung e rastend in eine Öffnung 4 einer Frontplatte 5 eingesetzt werden kann. Das Kupplungsteil 1 weist ein hülsenartiges Kupplungsgehäuse 2 auf, mit dessen Hilfe zwei Steckerteile miteinander verbindbar sind. In Figur 1 ist beispielhaft ein E-2000-Stecker gezeigt, der von zwei Seiten her in das Kupplungsgehäuse 2 eingesetzt werden kann. Das Kupplungsteil 1 eignet sich insbesondere für optische Steckverbindungen, wobei als Steckerteile (30) entsprechende optische Steckerteile, z.B. eben E-2000-Stecker verwendet werden. Selbstverständlich eignet sich das Kupplungsteil auch zum Verbinden anderer optischer Steckerteile, die dem Fachmann beispielsweise unter der Bezeichnung SC, LC, MU, etc. bekannt sind. Selbstverständlich wäre es auch denkbar, das Kupplungsteil alternativ auch als Receptacle auszubilden, bei dem ein einseitig eingesteckter Stecker Licht auf ein fest montiertes optisches Element sendet bzw. Licht von diesem Element empfängt.

Wie Figur 1 zeigt, besteht das Kupplungsteil im Wesentlichen aus drei Komponenten, dem Kupplungsgehäuse 2 und zwei an diesem befestigten Rastelementen 3 und 3'. Die Rastelemente 3 und 3' sind auf zwei gegenüberliegenden Seitenwänden des Kupplungsgehäuses angeordnet, wobei jedes Rastelement 3, 3' über zwei Sperrklinken 10 verfügt. Mit 11 ist ein Widerlager der Sperrklinke 10 erkennbar, die mit einer Rückseite der Frontplatte 5 in Eingriff bringbar ist. Die Rastelemente 3, 3' sind jeweils federnd und begrenzt verschiebbar am Kupplungsgehäuse 2 abgestützt. In Figur 1 ist eine Federzunge 7 des Rastelements 3 erkennbar. Die Rastelemente weisen einen Griffabschnitt 6 auf, der in eingesetzter Position von einer Vorderseite 20 der Frontplatte 5 her zugänglich ist und mit dessen Hilfe durch Druckbeaufschlagung in Verschieberichtung gegen das Kupplungsgehäuse 2 die Rastverbindung lösbar ist.

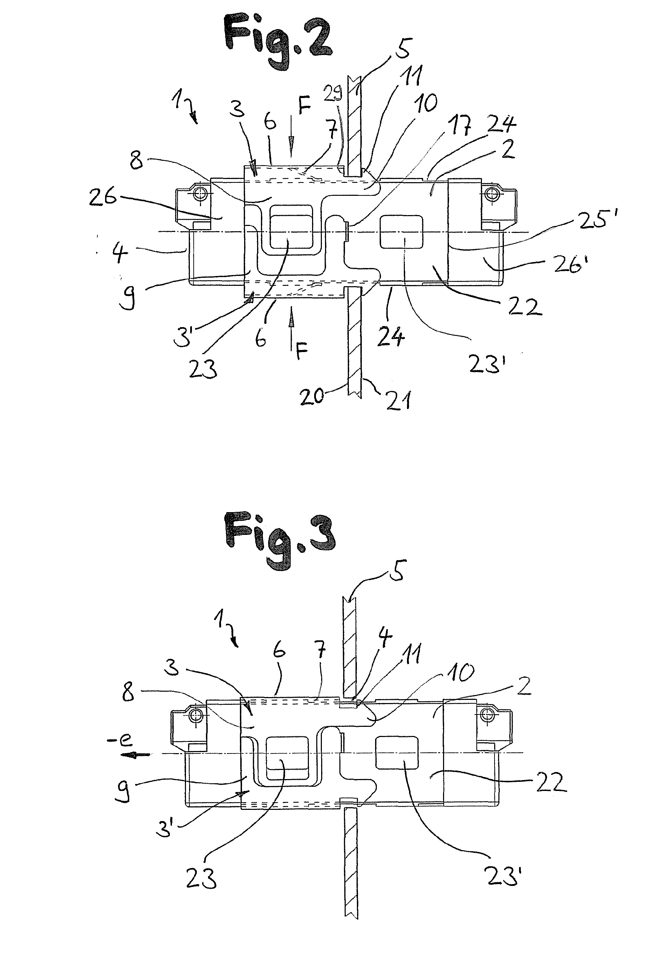

Das hülsenartige Kupplungsgehäuse ist im Querschnitt rechteckig ausgebildet, wobei zwei einander gegenüberliegende Seitenwände 24 je einem Griffabschnitt 6 eines Rastelements 3 (bzw. 3') zugeordnet sind. An den rechtwinklig anschliessenden Seitenwänden 22 liegen Schenkelabschnitte 8, 9 der jeweiligen Rastelemente 3 und 3' an. Zum Festlegen der Verschieberichtung und/oder zum Begrenzen des Verschiebewegs ist an der Seitenwand 22 des Kupplungsgehäuses 2 eine Erhebung 23 angeordnet, die in eine Ausnehmung 13 eines Schenkelabschnitts 8 eingreift. Die genaue Wirkungsweise des Kupplungsteils 1 ist nachfolgend anhand der Figuren 2 und 3 detailliert beschrieben.

In Figur 2 befindet sich das Kupplungsteil in eingesetzter Position in der Öffnung der Frontplatte 5. Ersichtlicherweise bildet das Widerlager 11 einen rückseitigen Anschlag für die Frontplatte 5. Als vorderseitiger Anschlag zum Festlegen der eingesetzten Position dient ein Winkelabschnitt 17. Selbstverständlich wäre es grundsätzlich aber auch vorstellbar, den vorderseitigen Anschlag auch durch die Sperrklinke 10 auszubilden. Die Sperrklinke verfügt über einen Ausschnitt, dessen vordere Flanke das Widerlager 11 bildet. Die hintere Flanke 29 des Ausschnitts könnte also - statt des Winkelabschnitts 17 - auch einen Anschlag für die Vorderseite der Frontplatte 5 bilden.

In Figur 2 ist weiterhin deutlich erkennbar, dass die Rastelemente 3, 3' jeweils über eine als Blattfeder ausgestaltete Federzunge 7 am Kupplungsgehäuse 2 abgestützt sind. Durch Druck auf einen Griffabschnitt 6, können die Rastelemente 3 und 3' gegeneinander zusammengedrückt werden (Druckkraft ist mit F angedeutet). Eine solche Stellung ist in Figur 3 gezeigt, bei welcher nach Druckbeaufschlagung die Rastelemente gegen das Kupplungsgehäuse verschoben sind. Die von den Schenkelabschnitten beaufschlagten oder beaufschlagbaren Bereiche der Seitenwand 22 bilden dabei Gleitflächen für die Schenkelabschnitte 8, 9 bei der Verschiebebewegung der Rastelemente 3, 3'. In der zusammengedrückten Position gemäss Figur 3 ist der Eingriff der Rastelemente in der Öffnung 4 der Frontplatte 5 aufgehoben. Das Kupplungsteil 1 kann nun in Richtung des Pfeils -e (Gegenrichtung zur Einsetzrichtung) aus der Öffnung herausgezogen werden.

Das Kupplungsgehäuse 2 verfügt auf zwei gegenüberliegenden Seitenwänden 22 über jeweils zwei Erhebungen 23 und 23'. Weiterhin ist an beiden Seiten des Kupplungsgehäuses 2 im Bereich der Steckeröffnungen für die Steckerteile ein Endabschnitt 26 angeordnet, der einen Kragen zur Führung der Rastelemente 3 und 3' bildet. Dieses Kupplungsgehäuse entspricht im Wesentlichen einem an sich bekannten Kupplungsgehäuse, wie es vom Anmelder seit einiger Zeit unter der Bezeichnung "E-2000™ Simplex Mittelstück" vertrieben wird. Neu ist jedoch die Verwendung der nachfolgend näher beschriebnen Rastelemente 3 und 3', die in Kombination mit diesem an sich bereits bekannten Kupplungsgehäuse 2 ein vorteilhaftes Kupplungsteil insbesondere hinsichtlich Handhabung ergeben. Selbstverständlich wären grundsätzlich auch andere Arten von Kupplungsgehäusen vorstellbar.

Die Erhebung 23 dient ersichtlicherweise dem Festlegen der Verschieberichtung F und zum Begrenzen des Verschiebewegs. Die Erhebung 23 ragt vorteilhaft gegenüber der Gleitfläche, auf der das Rastelement 3, 3' bei einer Verschiebebewegung entlang gleitet, soweit vor, dass dessen plane Aussenfläche etwa bündig zur benachbarten Aussenseite des Rastelements 3 verläuft. Die Tiefe der Erhebung 23 (sowie 23') entspricht also etwa der Dicke des Rastelements. Die von den Rastelementen 3, 3' beaufschlagten Bereiche der Seitenwände 24 sind gegenüber dem Endabschnitt 26 soweit zurück versetzt, dass der Griffabschnitt 6 in der zusammengedrückten Endstellung (Fig. 3) nahezu bündig zum Endabschnitt 26 verläuft

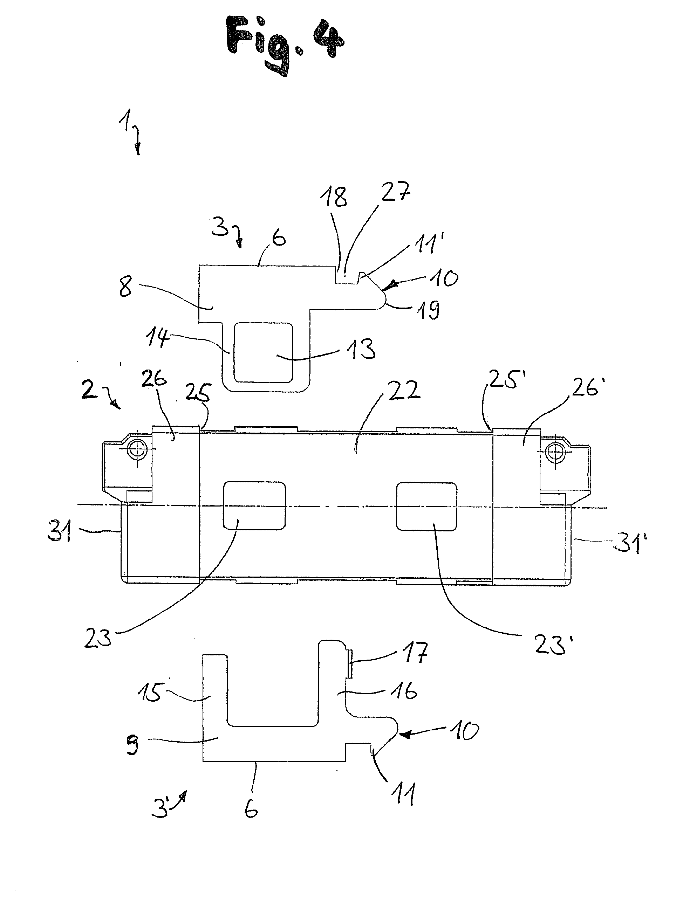

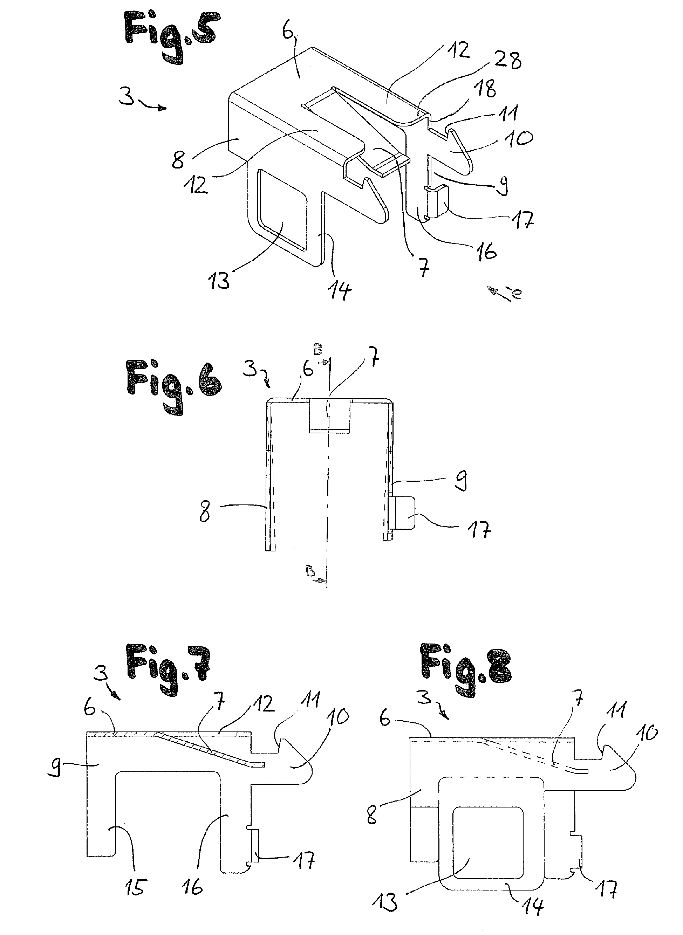

Figur 4 zeigt das Kupplungsteil 1 in demontiertem Zustand. Für ein besseres Verständnis ist Figur 4 dahingehend angepasst, dass von den Rastelementen 3 und 3' lediglich die dem Betrachter zugewandten Vorderseiten, d.h. die Schenkelabschnitte 8, dargestellt sind. Aus Figur 4 ist etwa deutlich erkennbar, dass der Endabschnitt 26 einen umlaufenden Kragen 25 definiert, der als seitliche Führung für die in Verschieberichtung bewegbaren Rastelemente 3 und 3' dient. Mit 31 und 31' sind Steckeröffnungen zur Aufnahme von Steckerteilen bezeichnet. An der dem Betrachter zugewandten Seitenwand ist die Erhebung 23 erkennbar, die für den Eingriff mit der Ausnehmung 13 des oberen Rastelements 3 vorgesehen ist. Selbstverständlich verfügt auch das gegenüberliegende untere Rastelement 3' über eine (jedoch hier nicht gezeigte) Ausnehmung, die mit einer der Erhebung gegenüberliegenden Erhebung auf der rückseitigen Seitenwand des Kupplungsgehäuses 2 in Eingriff bringbar ist (siehe nachfolgende Figuren 5 bis 8). Das Kupplungsgehäuse 2 ist bezogen auf eine Längsebene symmetrisch aufgebaut. Mit 31 und 31' sind Steckeröffnungen für die Steckerteile angedeutet.

Die Erhebungen 23 (sowie 23') und die Ausnehmung 13 weisen in der Draufsicht eine rechteckige Form auf. Die vordere Spitze 19 der Sperrklinke 10 ist ersichtlicherweise gerundet und ermöglicht ein einfaches Einführen des Kupplungsteils in die Öffnung einer Frontplatte.

In Figuren 5 bis 8 ist ein einzelnes Rastelement 3 (bzw. 3', beide Rastelemente für das Kupplungsteil sind gleich ausgebildet) gezeigt. Wie aus Figur 5 hervorgeht, weist das Rastelement einen Griffabschnitt 6 und daran etwa senkrecht anschliessende Schenklabschnitte 8 und 9 auf. Einer der Schenkelabschnitte 8 ist mit einem Rahmen 14 und der darin angeordneten Ausnehmung 13 versehen. Der andere Schenkelabschnitt 9 weist zwei Führungsabschnitte auf (erkennbar ist hier lediglich der vordere Führungsabschnitt 16), zwischen welchen der Rahmen des zweiten Rastelements führbar wäre. Am bezogen auf die Einsetzrichtung vorderen Ende des Führungsabschnitts 16 ist der Winkelabschnitt 17 angeordnet.

Das Rastelement 3 ist als Biegeteil aus Metall ausgebildet. An den Griffabschnitt 6 schliessen zwei sich etwa planparallel entlang dem Kupplungsgehäuse 2 erstreckende Armabschnitte 12 an. Zwischen den Armabschnitten 12 ist eine durch Stanz- und Biegeoperationen geschaffene Federzunge 7 als Blattfeder angeordnet. Die Federzunge 7 ist in einem spitzen Winkel gegenüber den Armabschnitten 12 abgewinkelt und erstreckt sich in Einsetzrichtung.

Die Vorderansicht gemäss Figur 6 zeigt illustrativ die U-Form des Rastelements 3. Ersichtlicherweise verlaufen die Schenkelabschnitte 8 und 9 senkrecht zu diesem verbindenden Griffabschnitt 6. Mit gestrichelten Linien ist eine Ruhelage des Rastelements angedeutet. Ersichtlicherweise sind die Schenkelabschnitt 8 und 9 in der Ruhelage gegenüber einer rechtwinklig verlaufenden Ebene leicht nach innen geneigt. Auf diese Weise kann eine Vorspannung erzeugt werden, wodurch das Rastelement in aufgeschnappter Lage sicher am Kupplungsgehäuse gehalten werden kann.

## Patentansprüche

1. Kupplungsteil für eine Steckverbindung mit einem hülsenartigen Kupplungsgehäuse (2), in das wenigstens ein Steckerteil einsteckbar ist und, das in eine Öffnung (4) einer Frontplatte (5) einsetzbar ist, wobei zum rastenden Einsetzen wenigstens ein Rastelement (3) vorgesehen ist, das federnd und begrenzt verschiebbar am Kupplungsgehäuse (2) abgestützt ist und das über wenigstens ein Widerlager (11) verfügt, das mit einer Rückseite der Frontplatte (5) in Eingriff bringbar ist, und wobei das Rastelement (3) weiter einen Griffabschnitt (6) aufweist, der in eingesetzter Position von einer Vorderseite der Frontplatte (5) her zugänglich ist und mit dessen Hilfe durch Druckbeaufschlagung in Verschieberichtung gegen das Kupplungsgehäuse (2) die Rastverbindung lösbar ist, **dadurch gekennzeichnet, dass** zum Festlegen der eingesetzten Position das Rastelement (3) einen Anschlag für die Vorderseite der Frontplatte (5) bildet.

2. Kupplungsteil nach Anspruch 1, **dadurch gekennzeichnet, dass** für die Federung eine Blattfeder (7) am Rastelement (3) angeformt ist.

3. Kupplungsteil nach Anspruch 2, **dadurch gekennzeichnet, dass** an den Griffabschnitt (6) zwei sich etwa planparallel entlang dem Kupplungsgehäuse (2) erstreckende Armabschnitte (12) anschliessen und dass zwischen den Armabschnitten (12) sich eine vorzugsweise durch Stanz- und Biegeoperationen geschaffene Federzunge (7) als Blattfeder angeordnet ist.

4. Kupplungsteil nach Anspruch 3, **dadurch gekennzeichnet, dass** die Federzunge (7) in einem spitzen Winkel gegenüber den Armabschnitten (12) abgewinkelt ist und sich in Einsetzrichtung (e) erstreckt.

5. Kupplungsteil nach einem der Ansprüche 1 bis 4, **dadurch gekennzeichnet, dass** das Rastelement (3) im Querschnitt U-förmig ausgebildet ist, wobei es zwei Schenkelabschnitte (8, 9) aufweist, die durch den quer zu diesen verlaufenden Griffabschnitt (6) miteinander verbunden sind.

6. Kupplungsteil nach Anspruch 5, **dadurch gekennzeichnet, dass** das Rastelement (3) am Kupplungsgehäuse (2) aufgeschnappt oder aufschnappbar ist, wobei die Schenkelabschnitte (8, 9) in aufgeschnappter Lage etwa vertikal zum Griffabschnitt (6) verlaufen und in Ruhelage zum Erzeugen einer Vorspannung gegenüber einer rechwinklig verlaufenden Ebene nach innen geneigt sind.

7. Kupplungsteil nach Anspruch 5 oder 6, **dadurch gekennzeichnet, dass** zum Festlegen der Verschieberichtung und/oder zum Begrenzen des Verschiebewegs an wenigstens einer Seitenwand (22) des Kupplungsgehäuses (2) eine Erhebung (23) angeordnet ist, die in eine Ausnehmung (13) eines Schenkelabschnitts (8) eingreift.

8. Kupplungsteil nach Anspruch 7, **dadurch gekennzeichnet, dass** die Erhebung (23) und die Ausnehmung (13) in einer Draufsicht eine rechteckige Form aufweisen.

9. Kupplungsteil nach einem der Ansprüche 1 bis 8, **dadurch gekennzeichnet, dass** zwei Rastelemente (3, 3') vorgesehen sind, die jeweils federnd an gegenüberliegenden Seitenwänden (24) des Kupplungsgehäuses (2) abgestützt sind, dass an zwei einander gegenüberliegenden Seitenwänden (22) des Kupplungsgehäuses (2) je eine Erhebung (23) angeordnet ist und dass jedes Rastelement (3) einen Schenkelabschnitt (8) mit einer Ausnehmung (13) aufweist, wobei zum Festlegen der Verschieberichtung und/oder zum Begrenzen des Verschiebewegs jeweils eine Erhebung (23) in die entsprechende Ausnehmung (13) eingreift.

10. Kupplungsteil nach Anspruch 9, **dadurch gekennzeichnet, dass** die beiden Rastelemente (3, 3) gleich ausgebildet sind.

11. Kupplungsteil nach Anspruch 9 oder 10, **dadurch gekennzeichnet, dass** wenigstens ein, bevorzugt jedes Rastelement (3, 3') einen Schenkelabschnitt (8) mit einem Rahmen (14) aufweist, in dem die Ausnehmung (13) angeordnet ist und dass im gegenüberliegenden Schenkelabschnitt (9) eine Führungsanordnung mit zwei parallelen Führungsabschnitten (15, 16) vorgesehen ist, zwischen denen der Rahmen (14) des jeweils anderen Rastelements (3) in Verschieberichtung begrenzt einschiebbar ist.

12. Kupplungsteil nach einem der Ansprüche 1 bis 11, **dadurch gekennzeichnet, dass** am Rastelement (3) ein einen Anschlag für die Vorderseite der Frontplatte (5) bildender, vorzugsweise etwa vertikal zur Seitenwand (22) verlaufender Winkelabschnitt (17) angeordnet ist.

13. Kupplungsteil nach Anspruch 12, **dadurch gekennzeichnet, dass** der Winkelabschnitt (17) an wenigstens einem Schenkelabschnitt (9), vorzugsweise am bezogen auf die EinsetzRichtung vorderen Ende des vorderen Führungsabschnitts (16) angeordnet ist.

14. Kupplungsteil nach einem der Ansprüche 1 bis 13, **dadurch gekennzeichnet, dass** das Kupplungsgehäuse (2) wenigstens einen teilweise umlaufenden Kragen (25) als Seitenbegrenzung und Führung für das wenigstens eine Rastelement (3, 3) aufweist.

15. Kupplungsteil nach Anspruch 14, **dadurch gekennzeichnet, dass** der Kragen (25) durch einen wenigstens einen Endabschnitt (26) gebildet ist, wobei die von den Rastelementen (3, 3') beaufschlagten Bereiche der Seitenwände (22) gegenüber dem Endabschnitt (26) zurück versetzt sind und dass der Griffabschnitt (6) in einer Endstellung durch Druckbeaufschlagung soweit gegen das Kupplungsgehäuse (2) verschiebbar ist, dass der Griffabschnitt (6) bündig oder nahezu bündig zum Endabschnitt (26) verläuft.

16. Rastelement (3) zum Halten eines Moduls, insbesondere eines Kupplungsteils (1) gemäss einem der Ansprüche 1 bis 16 in einer Öffnung (4) einer Frontplatte (5), das mittels Federmitteln (7) federnd und begrenzt verschiebbar an einem Gehäuse (2) des Moduls abstützbar ist und das über wenigstens ein Widerlager (11) verfügt, das mit einer Rückseite der Frontplatte (5) in Eingriff bringbar ist, **dadurch gekennzeichnet, dass** zum Bilden eines Anschlags für eine Vorderseite der Frontplatte (5) am Rastelement (3) ein Winkelabschnitt (17) angeformt ist oder der Anschlag für die Vorderseite der Frontplatte (5) durch eine rückseitige Flanke (18) einer eine Ausnehmung (27) umfassenden Sperrklinke (10) gebildet ist, wobei eine der Rückseite gegenüberliegende Flanke (18) der Ausnehmung (27) das Widerlager für die Rückseite der Frontplatte (5) bildet.

17. Rastelement (3) nach Anspruch 16, **dadurch gekennzeichnet, dass** es im Querschnitt U-förmig ausgebildet ist, wobei es zwei Schenkelabschnitte (8, 9) aufweist, die durch eine quer zu diesen verlaufenden Griffabschnitt (6) zum Lösen der Rastverbindung durch Druckbeaufschlagung miteinander verbunden sind, und dass der Winkelabschnitt (17) wenigstens einem der Schenkelabschnitte (9) zugeordnet ist.

18. Rastelement (3) nach Anspruch 16 oder 17, **dadurch gekennzeichnet, dass** die vordere Spitze (19) der Sperrklinke (10) gerundet ist.
